# EUROPÄISCHE PATENTSCHRIFT

(11) **EP 3 356 193 B1**
(45) Veröffentlichungstag und Bekanntmachung des Hinweises auf die Patenterteilung: **17.03.2021**
(21) Anmeldenummer: 16777966.9
(22) Anmeldetag: 29.09.2016
(51) Int. Cl.: B60T 13/74, B60T 7/04, B60T 17/04

(54) **BREMSGERÄT FÜR EINE HYDRAULISCHE KRAFTFAHRZEUGBREMSANLAGE**
BRAKING DEVICE FOR A HYDRAULIC MOTOR VEHICLE BRAKE SYSTEM
APPAREIL DE FREINAGE POUR SYSTÈME DE FREINAGE HYDRAULIQUE DE VÉHICULE À MOTEUR

(30) Priorität: 02.10.2015 DE 102015219126
(43) Veröffentlichungstag der Anmeldung: 08.08.2018
(73) Patentinhaber: Continental Teves AG & Co. OHG, 60488 Frankfurt am Main (DE)
(72) Erfinder: SCHIEL, Lothar, 65719 Hofheim (DE)
(74) Vertreter: Continental Corporation
(86) Internationale Anmeldenummer: PCT/EP2016/073357
(87) Internationale Veröffentlichungsnummer: WO 2017/055507

(56) Entgegenhaltungen:
- WO-A1-99/64284
- WO-A1-2011/020691
- WO-A1-2011/120955
- WO-A1-2011/120962
- WO-A1-2013/045161
- DE-A1-102008 035 180
- DE-A1-102011 077 354
- DE-A1-102014 202 373
- GB-A- 2 309 275

## Beschreibung

Die Erfindung betrifft ein Bremsgerät für eine hydraulische Kraftfahrzeugbremsanlage mit einem On-Demand Bremskraftverstärker.

Zur Erzeugung einer erforderlichen Bremskraft in hydraulischen Kraftfahrzeugbremsanlagen ist es allgemein bekannt, unterschiedliche Bremskraftverstärker einzusetzen, welche die Muskelkraft des Fahrers verstärkt an einen nachgestalteten Hauptbremszylinder weitergeben, oder die Kraft autonom elektronisch gesteuert erzeugen. Derartige Bremskraftverstärker benötigen zur Kraftverstärkung je nach Ausführung hydraulische, pneumatische, elektrische, mechanische Energie oder Kombination der vorgenannten.

Im Bestreben, den Energieverbrauch und Schadstoffausstoß eines Kraftfahrzeugs zu reduzieren, bemüht man sich, die Bremskraftverstärker möglichst kompakt, leicht und energiesparend zu gestalten. So werden verstärkt Bremskraftverstärker mit einem eigenen, meist elektromotorischen Antrieb zur Erzeugung der benötigten Energie eingesetzt, welcher lediglich beim tatsächlichen Bedarf aktiviert wird. Aus Gewichts- und Kostengründen wird dabei auf zusätzliche Energiespeicher wie bspw. Hochdruck-, Unterdruck, Federspeicher und Dergleichen verzichtet. Derartige energiespeicherlose Bremskraftverstärker, deren Energieversorgung akut und ausschließlich durch den zugeordneten Antrieb erfolgt, werden auch als "On-Demand" Bremskraftverstärker bezeichnet.

Der Einsatz von derartigen On-Demand Bremskraftverstärkern hat als Konsequenz, dass bei einer Fehlfunktion des Antriebes oder einer primären, den Antrieb speisenden Energiequelle die Verstärkungskraft nicht abrufbar ist und das System unmittelbar und ohne Vorwarnung in die unterste Rückfallebene fällt, wo das Fahrzeug lediglich durch Muskelkraft des Fahrers abgebremst werden muss. Weil der hydraulische Hauptbremszylinder den Volumenbedarf der Bremsanlage bedienen muss, hat er einen dafür ausgelegten verhältnismäßig großen Wirkdurchmesser. Damit der Fahrer physisch auch im Notfall eine ausreichende Verzögerung erwirken kann, wird eine maximal zulässige Fusskraft vorgeschrieben. Diese Obergrenze liegt jedoch mit bspw. 500N wesentlich höher, als der übliche, gewohnte Kraftaufwand. Es besteht jedoch die Gefahr, dass der Fahrer durch einen schlagartig gestiegenen Bedarf an Kraftaufwendung überrascht wird und rechtzeitig keine erforderliche Bremsverzögerung erwirkt. Ein Energiespeicher würde in einem solchen Fall noch für eine begrenzte Zeit Energie zur Kraftverstärkung liefern können, steht jedoch nicht zur Verfügung.

Zur Lösung des Problems sind kombinierte Bremsgeräte in integrierter Bauweise bekannt, bei denen für die Rückfallebene und die Betriebsbremsung zwei gesonderte, getrennte Betätigungszylinder mit jeweils unterschiedlichen Wirkdurchmessern vorgesehen sind. Hier bedient der Fahrer bei Energieausfall einen Pedalzylinder mit besonders kleinem Wirkdurchmesser, um so bei gesetzlich begrenzter Fusskraft eine höhere Abbremsung des Fahrzeuges zu erreichen Ein derartiges System ist jedoch komplex, zudem ist der Aufwand zur Anpassung an unterschiedliche Fahrzeugapplikationen mit einem verringerungswürdigen konstruktiven Aufwand verbunden.

Aus DE 10 2014 202 373 ist ein Bremskraftverstärkerloser, Stand-Alone Hauptbremszylinder mit abschaltbarem großen Wirkdurchmesser bekannt, der für reguläre Betriebsbremsungen alleine durch die Muskelkraft des Fahrers betätigt ist und lediglich bei Stark- und Notbremsungen durch eine nachgeschaltete elektronisch geregelte Modulatoreinheit für fahrdynamische Regelfunktionen zusätzlich unterstützt wird. Ein derartiges System ist jedoch insbesondere für Fahrzeuge mit einer geringen Fahrzeugmasse geeignet.

Es stellt sich daher die Aufgabe, ein verbessertes Bremsgerät mit einem On-Demand Bremskraftverstärker anzubieten, welcher bei Fehlfunktion oder Ausfall der Verstärkungskraft Auswirkungen auf den Fahrer reduziert und eine sichere Abbremsung mit zulässigen Pedalkräften und -wegen auch bei schwereren Fahrzeugen ermöglicht.

Die Aufgabe wird erfindungsgemäß durch ein Bremsgerät mit den Merkmalen nach dem Anspruch 1 gelöst. Unteransprüche geben weitere vorteilhafte Ausführungsformen und Weiterbildungen an.

Durch einen stufenweisen Aufbau des Bremsdrucks in der Druckkammer des Hauptbremszylinder können bei einer irregulären Bremsung - beispielsweise bei einem Ausfall der Antriebseinheit eines On-Demand Bremskraftverstärkers - sowohl die Fusskraft am Bremspedal als auch der Pedalweg insgesamt reduziert werden.

Dem Fahrer steht im Notfall eine reduziere Wirkfläche am Kolben im Hauptbremszylinder zur Verfügung, die es ihm ermöglicht mit der Fusskraft unterhalb der der zulässigen Obergrenze (insb. 500N) eine ausreichende Bremsverzögerung bis hin zu vorgeschriebenen Vollbremsverzögerung (insb. 0,643g) zu erreichen.

Bei einer fortgesetzten Betätigung bei höheren Bremsdrucken in der Druckkammer des Hauptbremszylinders ist eine kleinere Wirkfläche hydraulisch wirksam, wodurch die Obergrenze für die Fusskraft nicht überschritten wird.

Um das durch die kleinere Wirkfläche geringeres verdrängtes Volumen des Druckmittels auszugleichen, ist am Anfang der Betätigung eine wesentlich größere Wirkfläche zusätzlich hydraulisch wirksam, die druckabhängig hydraulisch unwirksam geschaltet wird.

Diese Um- beziehungsweise Abschaltung kann dabei ausfallsicher zwangsweise ohne elektrisch betätigte Ventile erfolgen, bei jeder Betätigung wirksam sein und ist durch konstruktive Auslegung der Vorspannung auf unterschiedliche Drucke anpassbar. Vorzugsweise wird die Umschaltung durch eine Ventilanordnung mit einem federbelasteten Ventilkolben umgesetzt, welche druckgesteuert eine hydraulische Verbindung zwischen einer der größeren Wirkfläche zugeordnete Füllstufenkammer in dem Hauptbremszylinder mit dem drucklosen Druckmittelbehälter sperrt oder freigibt.

Dabei kann die Ventilanordnung in unterschiedlichen erfindungsgemäßen Ausführungsformen sowohl im Kolben als auch im Gehäuse des Hauptbremszylinders angeordnet werden.

Bei einem regulären Bremsvorgang mit einem ordnungsgemäß funktionierenden Bremskraftverstärker wird der Stufenweise Druckaufbau durch die Steuerung der Antriebseinheit bzw. des Bremskraftverstärkers ausgeglichen, so dass der Fahrer keine Auswirkungen am Bremspedal spürt.

Die erfindungsgemäße Ventilanordnung kann kostengünstig und mit einem geringen Entwicklungsaufwand an die bewähre Tandem Hauptbremszylindertechnologie adaptiert werden.

Eine Modulare Bauweise durch eine Kombination geeigneter Ausführungen von Bremskraftverstärkern und Hauptbremszylindern an einer vorzugsweise standardisierten Schnittstelle wird ermöglicht, wodurch unterschiedliche Varianten einfach erzeugt werden können.

Ein Hauptbremszylinder kann so auf konventionelle Art an dem Gehäuse des Bremskraftverstärkers montiert und über eine vorzugsweise standardisierte Schnittstelle wirkungsmäßig mit diesem verbunden.

Hierbei können sowohl hydraulische als auch mechanische, elektrische, pneumatische und kombinierte On-Demand Bremskraftverstärker eingesetzt werden.

Kein erhöhter Bauraumbedarf ist erforderlich, auch die elektrischen, hydraulischen und mechanischen Schnittstellen können mit konventionellen Bremsgeräten unifiziert werden.

Keine zusätzliche elektronische Überwachung des Bremsgerätes ist notwendig, da des stufenweise Bremsdruckaufbau permanent aktiv ist im Notfall nicht zusätzlich aktiviert werden muss.

Weitere Einzelheiten, Merkmale, Vorteile und Anwendungsmöglichkeiten der Erfindung gehen aus den Unteransprüchen zusammen mit der Beschreibung anhand der Zeichnungen hervor. Übereinstimmende Komponenten und Konstruktionselemente werden nach Möglichkeit mit gleichen Bezugszeichen versehen. Nachstehend zeigt:

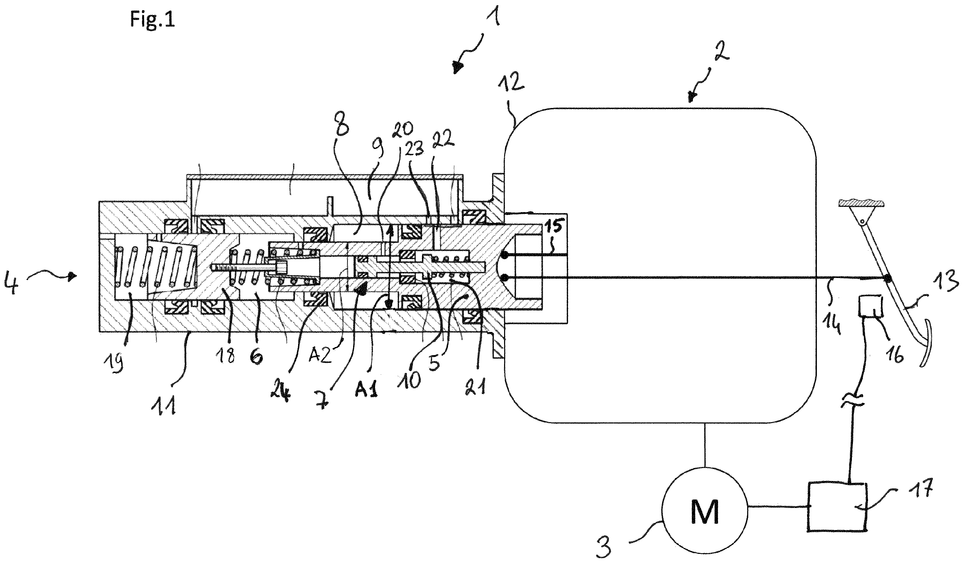

Fig.1 eine vereinfachte Darstellung einer Ausführungsform des erfindungsgemäßen Bremsgeräts mit einem Hauptbremszylinder in Tandembauweise und einem einstufigen Kolben.
Fig.2 eine vereinfachte Darstellung einer weiteren erfindungsgemäßen Ausführungsform des Bremsgeräts mit einem anderen Hauptbremszylinder mit einem zweistufigen Kolben.
Fig.3 ein Diagramm, zeigend das Verhältnis zwischen der Fusskraft und Bremsverzögerung im regulären Betrieb sowie in der Rückfallebene bei unterschiedlich großen Wirkflächen.

### Fig.1:

Das Bremsgerät 1 umfasst einen mit Druckmittel befüllten Hauptbremszylinder 4, der am Gehäuse 12 eines nur schematisch dargestellten Bremskraftverstärkers 2 montiert ist. Der Bremskraftverstärker 2 ist durch eine elektromotorische Antriebseinheit 3 nach On-Demand Prinzip angetrieben. Hierbei bezieht der Bremskraftverstärker 2 die zur Erzeugung einer verstärkten Bremskraft benötigte Energie ausschließlich von der Antriebseinheit 3 während ihres Betriebs und verfügt über keinen gesonderten Energiespeicher, der Energieversorgung bei einer deaktivierten Antriebseinheit sicherstellen würde.

Die Steuerung des Bremskraftverstärkers 2 erfolgt durch eine elektronische Steuereinheit 17.

Beim regulären Bremsbetrieb vermittelt der Bremskraftverstärker 2 die Bremskraft über eine Koppelvorrichtung 15 an den nachgeschalteten Kolben 5 des Hauptbremszylinders 4.

Bei einem Ausfall der Energieversorgung oder anderen Störungen, bei denen der Bremskraftverstärker 2 nicht ordnungsgemäß funktionieren kann - in der sogenannten Rückfallebene - wird der Kolben 5 über die Koppelvorrichtung 14 unmittelbar vom Bremspedal 13 alleine durch die Muskelkraft des Fahrers betätigt.

Die beiden Koppelvorrichtungen 14, 15 können innerhalb der Erfindung auch zusammengeführt als eine gemeinsame Koppelvorrichtung ausgebildet sein.

Ebenso kann innerhalb der Erfindung in der Wirkkette zwischen dem Bremspedal 13 und dem Kolben 5 eine hier nicht gezeigte Simulatoreinheit vorgesehen sein, die beim Einsatz des Bremskraftverstärkers 2 eine haptische Rückmeldung an das Bremspedal 13 erzeigt.

Eine Sensorvorrichtung 16 registriert im regulären Bremsbetrieb den Bremswunsch des Fahrers und vermittelt ihn an die elektronische Steuereinheit 17 zwecks entsprechender Ansteuerung der Antriebseinheit 3 beziehungsweise des Bremskraftverstärkers 2.

Der Kolben 5 ist im Gehäuse 11 des Hauptbremszylinders 4 verschiebbar gelagert und begrenzt eine mit einem nicht gezeigten Bremskreis verbundene Druckkammer 6. In der gezeigten Ausführung ist der Kolben 5 als ein Stufenkolben mit zwei Stufen ausgebildet. Bei Verschiebung des Kolbens 5 in Richtung Druckkammer 6 ist die erste Stufe mit der größeren Wirkfläche A1 und die zweite Stufe mit der kleineren Wirkfläche A2 hydraulisch wirksam am Aufbau des Bremsdruckes in der Druckkammer 6 beteiligt. Während die Wirkfläche A2 ausschließlich in der Druckkammer 6 wirkt, verdrängt die Wirkfläche A1 das Druckmittel aus einer gesonderten Füllstufenkammer 8 vorbei am richtungsabhängigen Dichtelement 24 in die Druckkammer 6.

In dem Kolben 5 ist eine Ventilanordnung 7 mit einem rückseitig federbelasteten Ventilkolben 10 angeordnet. Zu Beginn einer Bremsung ist die Ventilanordnung 7 geschlossen. Sobald der Bremsdruck in der Druckkammer 6 jedoch einen definierten Wert erreicht, der die Federlast übersteigt, verschiebt sich der Ventilkolben 10 gegen die Federlast, so dass die Ventilanordnung 7 öffnet und eine hydraulische Verbindung zwischen der Füllstufenkammer 8 und dem Drucklosen Druckmittelbehälter 9 über eine Kette vom Verbindungskanälen 20,21,22,23 freigibt. Dadurch wird das Druckmittel aus der Füllstufenkammer 8 in den Druckmittelbehälter 9 und nicht mehr in die Druckkammer 6 verdrängt und die Wirkfläche A1 somit in Bezug auf den Bremsdruckaufbau hydraulisch unwirksam geschaltet, beziehungsweise abgeschaltet, das Kraft-Weg-Verhältnis am Kolben 5 verändert sich sprungartig. Fortan erfolgt der Bremsdruckaufbau in der Druckkammer 6 nur durch die kleinere Wirkfläche A2 und somit insgesamt stufenweise.

In der gezeigten erfindungsgemäßen Ausführungsform ist der Hauptbremszylinder 4 in Tandembauweise ausgebildet. Dabei ist im Gehäuse 11 eine weitere, vordere eine Druckkammer 19 angeordnet, die auf einen eigenen, nicht gezeigten Bremskreis wirkt. Zwischen den Druckkammern 6 und 19 ist ein Schwimmkoben 18 verschiebbar geführt, der regulär durch den Bremsdruck in der Druckkammer 6 und bei einem Druckabfall in der Druckkammer 6 unmittelbar mechanisch durch den Kolben 5 betätigt wird.

### Fig.2:

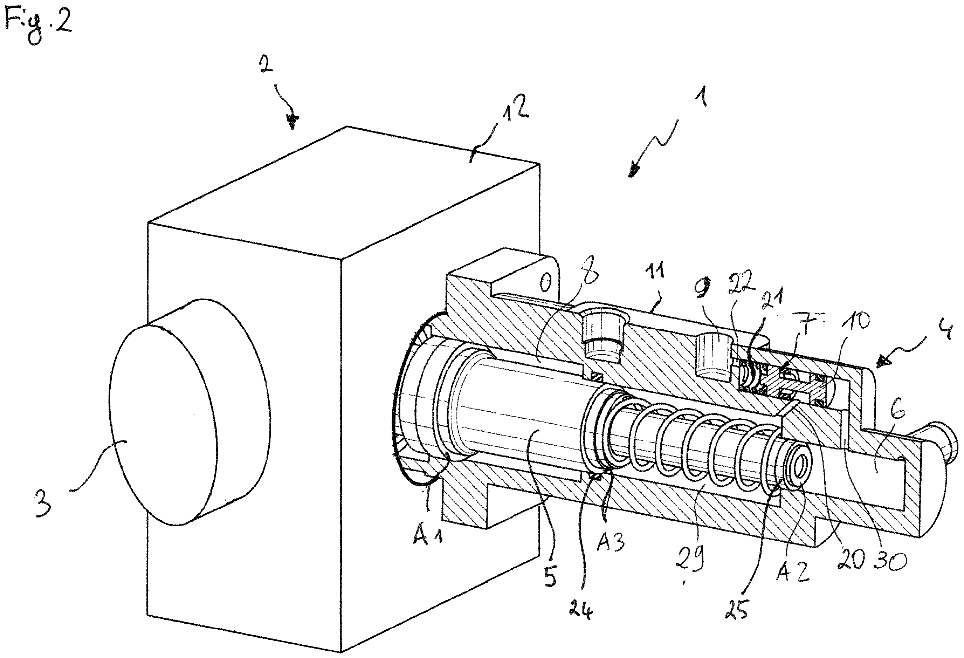

In der Fig.2 ist eine andere Ausführung des erfindungsgemäßen Bremsgerätes vereinfacht dargestellt. Der Hauptbremszylinder 4 ist hier nicht in Tandembauweise ausgebildet und weist einen einzelnen dreistufigen Kolben 5 auf, welcher mit 3 unterschiedlich großen Wirkflächen A1, A2 und A3 ausgestattet ist.

Die Ventilanordnung 7 ist im Gehäuse 11 des Hauptbremszylinders 4 integriert. Die Wirkfläche A1 verdrängt das Druckmittel aus der Füllstufenkammer 8 in eine Zwischenkammer 29, wo es durch die Wirkfläche A3 weiter in die Druckkammer 6 verdrängt wird. Dabei werden die Dichtelemente 24 und 25 jeweils in Richtung Druckkammer 6 überströmt. Die kleinste Wirkfläche A2 komprimiert das Druckmittel in der Druckkammer 6 und verdrängt es in einen daran angeschlossenen Bremskreis.

Der Bremsdruck in der Druckkammer 6 wird durch die Bohrung 30 an den federbelasteten Ventilkolben 10 weitergegeben, welches beim Erreichen eines definierten Druckwertes eine hydraulische Verbindung durch die Verbindungskanäle 20,21 zwischen der Zwischenkammer 29 und dem drucklosen Druckmittelbehälter 9 freigibt. Dadurch wird das Druckmittel aus der Füllstufenkammer 8 und der Zwischenkammer 29 in den Druckmittelbehälter 9 verdrängt und die Wirkflächen A1 und A3 hydraulisch unwirksam geschaltet.

### Fig.3:

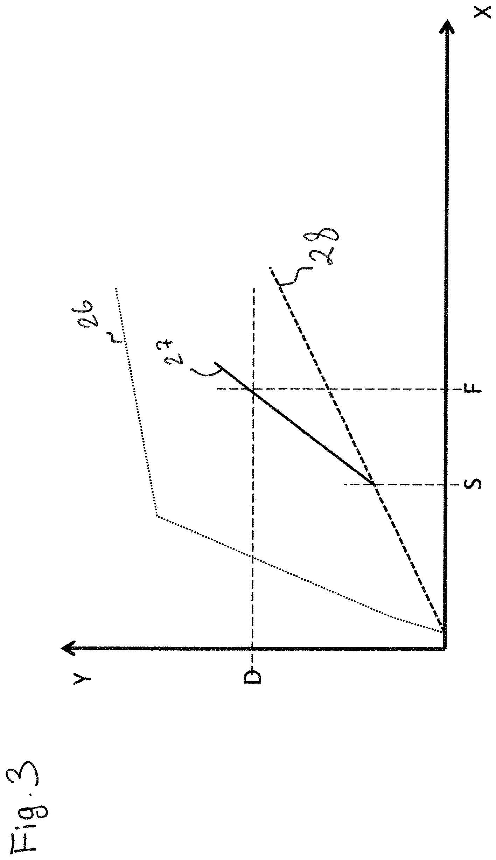

Fig.3 zeigt ein Diagramm zur prinzipiellen Verdeutlichung der Wirksamkeit des erfindungsgemäßen Bremsgeräts. Die X-Achse steht für die erforderliche Fusskraft am Bremspedal 13, die Y-Achse für die Bremsverzögerung des Fahrzeugs. Die senkrechte Linie F markiert einen oberen Grenzwert für die Fusskraft, beispielsweise eine gesetzlich vorgeschriebene Obergrenze von 500N. Die waagerechte Linie D markiert einen definierten Zielwert für die Bremsverzögerung des Fahrzeugs, insbesondere einen für eine Not- oder Vollbremsung erforderlichen Mindestwert. Dieser kann ebenfalls gesetzlich vorgeschrieben sein und beispielsweise die Größenordnung von 0,643g haben.

Der Graph 26 zeigt einen Verlauf der Fusskraft und die damit einhergehende Fahrzeugverzögerung beim ordnungsgemäß funktionierenden Bremskraftverstärker 2 an einer definierten Fahrzeugapplikation. Die Fusskraft am Bremspedal 13 kann dabei je nach Ausführung durch die Regelung des Bremskraftverstärkers 2 oder eine gesonderte Simulatoreinheit gezielt manipuliert werden.

Beim Ausfall der Bremskraftverstärkers 2, in der Rückfallebene, hängt die Bremsverzögerung jedoch unmittelbar von der Fusskraft ab. In der ersten Phase der Bremsung ist die größere Wirkfläche A1 aktiv. Dies ermöglicht zwar einen kürzeren Pedalweg, weil größeres Druckmittelvolumen verdrängt wird, jedoch steigt die Fusskraft so schnell, dass ein für die erforderliche Bremsverzögerung D erforderliche Bremsdruck nicht innerhalb der Obergrenze der Fusskraft F erreicht werden würde dies ist durch den Graph 28 verdeutlicht.

Beim Erreichen eines definierten Bremsdrucks wird im schaltpunkt S die Wirkfläche A1 abgeschaltet, so dass lediglich die kleinere Wirkfläche A2 zum Aufbau des Bremsdruckes beiträgt. Dadurch steigt die Fusskraft nur noch moderat und der Zielwert für die Bremsverzögerung D kann innerhalb des Grenzwertes F erreicht werden. Dies zeigt der Graph 27.

### Bezugszeichen:

- 1: Bremsgerät
- 2: Bremskraftverstärker
- 3: Antriebseinheit
- 4: Hauptbremszylinder
- 5: Kolben
- 6: Druckkammer
- 7: Ventilanordnung
- 8: Füllstufenkammer
- 9: Druckmittebehälter
- 10: Ventilkolben
- 11: Gehäuse
- 12: Gehäuse
- 13: Bremspedal
- 14: Koppelvorrichtung
- 15: Koppelvorrichtung
- 16: Sensorvorrichtung
- 17: elektronische Steuereinheit
- 18: Schwimmkolben
- 19: Druckkammer
- 20: Verbindungskanal
- 21: Verbindungskanal
- 22: Verbindungskanal
- 23: Verbindungskanal
- 24: Dichtelement
- 25: Dichtelement
- 26: Graph Betriebsbremsung
- 27: Graph Rückfallebene mit A2
- 28: Graph Rückfallebene mit A1
- 29: Zwischenkammer
- 30: Bohrung
- A1,A2,A3: Wirkfläche
- F: Obergrenze Fusskraft
- D: Zielwert Bremsverzögerung
- S: Schaltpunkt

## Patentansprüche

1. Bremsgerät (1) für eine hydraulische Kraftfahrzeugbremsanlage, mit:
- einem Hauptbremszylinder (4) mit wenigstens einem darin linear verschiebbaren Kolben (5), der wenigstens eine mit einem Druckmittel befüllte Druckkammer (6) zur Erzeugung von hydraulischen Bremsdruck begrenzt,
- wobei in dem Hauptbremszylinder (4) wenigstens eine Wirkfläche (A1) zur Erzeugung von Bremsdruck in der Druckkammer (6) druckgesteuert hydraulisch wirkungslos schaltbar ist, wodurch der Bremsdruck in der Druckkammer (6) stufenweise aufgebaut wird,
wobei die Abschaltung der Wirkfläche (A1) durch eine Ventilanordnung (7) erfolgt, die durch den Druck in der Drucckammer (6) gesteuert ist, **dadurch gekennzeichnet, dass** der Kolben (5) bei einer regulären Betriebsbremsung durch einen elektronisch gesteuerten Bremskraftverstärker (2) und bei einer irregulären Bremsung mit einer Muskelkraft eines Fahrers beaufschlagt ist, wobei dem Bremskraftverstärker (2) eine elektromotorische Antriebseinheit (3) zugeordnet ist, bei deren Aktivierung eine verstärkte Bremskraft erzeugt wird und der Bremskraftverstärker (2) derart energiespeicherlos vorgesehen ist, dass bei deaktivierten Antriebseinheit (3) keine verstärkte Bremskraft erzeugt wird.

2. Bremsgerät (1) nach Anspruch 1 **dadurch gekennzeichnet, dass** die Wirkfläche (A1) an dem Kolben (5) ausgebildet ist.

3. Bremsgerät (1) nach Anspruch 1 **dadurch gekennzeichnet, dass** der Kolben (5) als Stufenkolben mit der Wirkfläche (A1) und wenigstens einer weiteren Wirkfläche (A2) ausgebildet ist.

4. Bremsgerät (1) nach Anspruch 3 **dadurch gekennzeichnet, dass** die Wirkfläche (A1) größer als die Wirkfläche (A2) ausgebildet ist.

5. Bremsgerät (1) nach Anspruch 1 **dadurch gekennzeichnet, dass** die Wirkfläche (A1) bei einem Bremsvorgang das Druckmittel aus einer Füllstufenkammer (8) vor ihrer Abschaltung in die Druckkammer (6) und nach der Abschaltung in einen drucklosen Druckmittebehälter (9) verdrängt.

6. Bremsgerät (1) nach Anspruch 1 **dadurch gekennzeichnet, dass** die Ventilanordnung (7) einen federbelasteten Ventilkolben (10) umfasst, welcher bei einem definierten Druck in der Drucckammer (6) zwangsweise öffnet.

7. Bremsgerät (1) nach Anspruch 5 **dadurch gekennzeichnet, dass** die Ventilanordnung (7) zum Sperren einer hydraulischen Verbindung zwischen der Füllstufenkammer (8) und Druckmittebehälter (9) ausgebildet ist.

8. Bremsgerät (1) nach Anspruch 1 **dadurch gekennzeichnet, dass** die Ventilanordnung (7) in dem Kolben (5) oder in einem Gehäuse (11) des Hauptbremszylinders (4) integriert angeordnet ist.

9. Bremsgerät (1) nach Anspruch 1 **dadurch gekennzeichnet, dass** die verstärkte Bremskraft in dem Bremskraftverstärker (2) hydraulisch erzeugt ist.

10. Bremsgerät (1) nach Anspruch 1 **dadurch gekennzeichnet, dass** die verstärkte Bremskraft in dem Bremskraftverstärker (2) mechanisch erzeugt ist.

11. Bremsgerät (1) nach Anspruch 1 **dadurch gekennzeichnet, dass** die verstärkte Bremskraft in dem Bremskraftverstärker (2) pneumatisch erzeugt ist.

12. Bremsgerät (1) nach Anspruch 1 **dadurch gekennzeichnet, dass** der Hauptbremszylinder (4) als eine gesonderte Baukomponente ausgebildet und an einem Gehäuse (12) des Bremskraftverstärkers (2) montiert ist.

## Claims

1. Brake device (1) for a hydraulic motor vehicle brake system, having:
- a master brake cylinder (4) having at least one piston (5) which is linearly displaceable therein and bounds at least one pressure chamber (6) which is filled with a pressure medium and has the purpose of generating hydraulic brake pressure,
- wherein at least one active face (A1) for generating brake pressure in the pressure chamber (6) can be switched in a hydraulically ineffective fashion under the control of pressure in the master brake cylinder (4), as a result of which the brake pressure in the pressure chamber (6) is built up incremented,
wherein the deactivation of the active face (A1) is carried out by a valve arrangement (7) which is controlled by the pressure in the pressure chamber (6), **characterized in that** during regular service braking an electronically controlled brake booster (2) acts on the piston (5), and during irregular braking the muscle power of a driver acts on the piston (5), wherein the brake booster (2) is assigned an electromotive drive unit (3), at whose activation a boosted braking force is generated, and the brake booster (2) is provided without an energy store, such that when the drive unit (3) is deactivated a boosted braking force is not generated.

2. Brake device (1) according to Claim 1, **characterized in that** the active face (A1) is formed on the piston (5) .

3. Brake device (1) according to Claim 1, **characterized in that** the piston (5) is embodied as a stepped piston with the active face (A1) and at least one further active face (A2).

4. Brake device (1) according to Claim 3, **characterized in that** the active face (A1) is made larger than the active face (A2).

5. Brake device (1) according to Claim 1, **characterized in that** during a braking process the active face (A1) forces the pressure medium out of a filling stepped chamber (8) into the pressure chamber (6) before said active face (A1) is deactivated, and into a pressureless pressure medium vessel (9) after said active face (A1) is deactivated.

6. Brake device (1) according to Claim 1, **characterized in that** the valve arrangement (7) comprises a spring-loaded valve piston (10) which forcibly opens at a defined pressure in the pressure chamber (6).

7. Brake device (1) according to Claim 5, **characterized in that** the valve arrangement (7) is designed to block a hydraulic connection between the filling stepped chamber (8) and the pressure medium vessel (9) .

8. Brake device (1) according to Claim 1, **characterized in that** the valve arrangement (7) is arranged integrated into the piston (5) or into a housing (11) of the master brake cylinder (4).

9. Brake device (1) according to Claim 1, **characterized in that** the boosted braking is generated hydraulically in the brake booster (2).

10. Brake device (1) according to Claim 1, **characterized in that** the boosted braking force is generated mechanically in the brake booster (2).

11. Brake device (1) according to Claim 1, **characterized in that** the boosted braking force is generated pneumatically in the brake booster (2).

12. Brake device (1) according to Claim 1, **characterized in that** the master brake cylinder (4) is embodied as a separate component and is mounted on a housing (12) of the brake booster (2).

## Revendications

1. Appareil de freinage (1) pour une unité de freinage hydraulique de véhicule à moteur, muni :
- d'un cylindre de freinage principal (4) muni d'au moins un piston (5) coulissant linéairement dans celui-ci, qui délimite au moins une chambre de pression (6) remplie avec un fluide sous pression pour la génération d'une pression de freinage hydraulique,
- au moins une surface active (A1) dans le cylindre de freinage principal (4) pouvant être commutée pour être hydrauliquement sans effet sous commande de la pression pour la génération d'une pression de freinage dans la chambre de pression (6), ce qui permet d'établir progressivement la pression de freinage dans la chambre de pression (6),
la déconnexion de la surface active (A1) ayant lieu par le biais d'un agencement de soupape (7), qui est commandé par la pression dans la chambre de pression (6), **caractérisé en ce que** le piston (5) est sollicité dans le cas d'un freinage de service régulier par un amplificateur de force de freinage commandé électroniquement (2) et dans le cas d'un freinage irrégulier avec une force musculaire d'un conducteur, une unité d'entraînement électromotrice (3) étant associée à l'amplificateur de force de freinage (2), lors de l'activation de laquelle une force de freinage amplifiée est générée, et l'amplificateur de force de freinage (2) étant prévu exempt d'accumulateur d'énergie de telle sorte que lorsque l'unité d'entraînement est désactivée (3), une force de freinage amplifiée ne soit pas générée.

2. Appareil de freinage (1) selon la revendication 1, **caractérisé en ce que** la surface active (A1) est configurée sur le piston (5).

3. Appareil de freinage (1) selon la revendication 1, **caractérisé en ce que** le piston (5) est configuré sous la forme d'un piston à gradin avec la surface active (A1) et au moins une surface active supplémentaire (A2) .

4. Appareil de freinage (1) selon la revendication 3, **caractérisé en ce que** la surface active (A1) est configurée de plus grande taille que la surface active (A2) .

5. Appareil de freinage (1) selon la revendication 1, **caractérisé en ce que** la surface active (A1) déplace lors d'un processus de freinage le fluide sous pression depuis une chambre de remplissage à gradin (8) avant sa déconnexion dans la chambre de pression (6) et après la déconnexion dans un contenant de fluide sous pression sans pression (9).

6. Appareil de freinage (1) selon la revendication 1, **caractérisé en ce que** l'agencement de soupape (7) comprend un piston de soupape (10) sollicité par ressort, qui s'ouvre obligatoirement à une pression définie dans la chambre de pression (6).

7. Appareil de freinage (1) selon la revendication 5, **caractérisé en ce que** l'agencement de soupape (7) est configuré pour le blocage d'une liaison hydraulique entre la chambre de remplissage à gradin (8) et le contenant de fluide sous pression (9).

8. Appareil de freinage (1) selon la revendication 1, **caractérisé en ce que** l'agencement de soupape (7) est agencé de manière intégrée dans le piston (5) ou dans un boîtier (11) du cylindre de freinage principal (4).

9. Appareil de freinage (1) selon la revendication 1, **caractérisé en ce que** la force de freinage amplifiée est générée hydrauliquement dans l'amplificateur de force de freinage (2).

10. Appareil de freinage (1) selon la revendication 1, **caractérisé en ce que** la force de freinage amplifiée est générée mécaniquement dans l'amplificateur de force de freinage (2).

11. Appareil de freinage (1) selon la revendication 1, **caractérisé en ce que** la force de freinage amplifiée est générée pneumatiquement dans l'amplificateur de force de freinage (2).

12. Appareil de freinage (1) selon la revendication 1, **caractérisé en ce que** le cylindre de freinage principal (4) est configuré sous la forme d'un composant constitutif particulier et est monté sur un boîtier (12) de l'amplificateur de force de freinage (2).
